(19) **Europäisches Patentamt**
**European Patent Office**
**Office européen des brevets**

(11) **EP 4 492 083 A1**

(12) **EUROPEAN PATENT APPLICATION**

(43) Date of publication:
**15.01.2025   Bulletin 2025/03**

(21) Application number: **23184414.3**

(22) Date of filing: **10.07.2023**

(51) International Patent Classification (IPC):
**G01S 7/41** (2006.01)   **G01S 13/42** (2006.01)
**G01S 13/50** (2006.01)   **G01S 7/02** (2006.01)
**G06N 20/00** (2019.01)   **G06N 5/01** (2023.01)
**G06N 3/04** (2023.01)   **G06N 3/08** (2023.01)

(52) Cooperative Patent Classification (CPC):
**G01S 7/417; G01S 7/024; G01S 13/42;**
**G01S 13/50; G06N 3/04; G06N 3/08; G06N 5/01;**
**G06N 20/00**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Robert Bosch GmbH**
**70442 Stuttgart (DE)**

(72) Inventors:
• **Beluch, William Harris**
**70197 Stuttgart (DE)**
• **Patel, Kanil**
**13189 Berlin (DE)**

Remarks:
Amended claims in accordance with Rule 137(2) EPC.

(54) **DEVICE AND COMPUTER IMPLEMENTED METHOD FOR MACHINE LEARNING, TECHNICAL SYSTEM COMPRISING THE DEVICE**

(57)    A device and a computer implemented method for machine learning, wherein the method comprises providing a first model (300), in particular a neural network that comprises weights, that is configured to map data (302) of a first radar spectrum, in particular data from a region of interest of the first radar spectrum, to first features (304) that represent the data (302), providing the data (302) and a physical attribute of the data, in particular a range (108), an azimuth, a velocity or an indication of the polarizations of the sent and received radar signals that the data is based on, providing a first output (306) that is configured to map the first features (304) to a prediction of the physical attribute, in particular a prediction (310) of the range, a prediction (314) of the azimuth, a prediction (316) of the velocity or a prediction (322, ..., 328) of the indication of the polarizations of the sent and received radar signals, mapping the data (302) with the first model (300) to the first features (304), mapping the first features (304) with the first output (306) to the prediction of the physical attribute, and learning the first model (300), in particular learning the weights, depending on a difference between the prediction of the physical attribute and the physical attribute. A technical system comprising the device.

Fig. 3

**Description**

Background

The invention concerns a device and a computer-implemented method for machine learning, and a technical system comprising the device.

Despite an abundance of data for machine learning, a limitation for machine learning is the small fraction of this data, which is labelled, or the cost of labelling a fraction of this data that is large enough for successful machine learning.

Disclosure of the invention

The computer implemented method for machine learning comprises providing a first model, in particular a neural network that comprises weights, that is configured to map data of a first radar spectrum, in particular data from a region of interest of the first radar spectrum, to first features that represent the data, providing the data and at least one physical attribute of the data, in particular a range, an azimuth, a velocity and/or an indication of the polarizations of the sent and received radar signals that the data is based on, providing a first output that is configured to map the first features to a prediction of the at least one attribute, in particular a prediction of the range, a prediction of the azimuth, a prediction of the velocity and/or a prediction of the indication of the polarizations of the sent and received radar signals, mapping the data with the first model to the first features, mapping the first features with the first output to the prediction of the at least one attribute, and learning the first model, in particular learning the weights, depending on a difference between the prediction of the at least one physical attribute and the at least one physical attribute. The method leverages physical attributes that are readily available and offered by radar sensors. The physical attributes comprise radar-specific information that is acquired by prior radar knowledge. The method learns radar spectra representations, i.e. the first features, by feature extraction from unlabeled data. Predicting physical attributes are natural auxiliary tasks, which are useful for the feature extraction. As these auxiliary tasks are realistic and highly relevant for understanding the radar spectra (e.g., classification or detection), the newly learned first features are highly informative which would be difficult or impossible to obtain otherwise.

The first output may comprise a first neural network that has first weights, wherein the method comprises learning the first weights depending on the difference between the prediction of the physical attribute and the physical attribute. This improves the result of the machine learning further.

The learning of the first model depending on the difference between the prediction of the at least one physical attribute and the at least one physical attribute may comprise determining the difference between the prediction of the range and the range, determining the difference between the prediction of the azimuth and the azimuth, determining the difference between the prediction of the velocity and the velocity, and/or determining the difference between the prediction of the indication of the polarizations and the indication of the polarizations. The radar spectrum may comprise different physical attributes. The use of one or more of the physical attributes improves the quality of the extracted features with respect to the respective physical attribute further.

The method may comprise learning the first model or the first output depending on at least two of the differences. The use of different physical attributes improves the quality of the extracted features with respect to these physical attributes further.

Providing the first output may comprise providing the first output to comprise one branch for mapping the first features to the prediction of the physical attribute, in particular one branch for mapping the first features to a prediction of the range, one branch for mapping the first features to a prediction of the azimuth, one branch for mapping the first features to a prediction of the velocity, and/or one branch for mapping the first features to a prediction of the indication of the polarizations. The machine learning may use one or more of the auxiliary tasks. The use of the separate branch for a task improves the machine learning further.

The method may comprise mapping data of a second radar spectrum, in particular data from a region of interest of the second radar spectrum, with the learned first model to second features, providing a second output that is configured to map the second features to a prediction for a task, in particular a prediction for a classification or a prediction for an object detection, providing a reference for the prediction for the task, in particular a label indicating a ground truth of the classification or the object detection, mapping the second features with the second output to the prediction for the task, and training the learned first model, in particular updating the learned weights, depending on a difference between the prediction for the task and the reference. The first model has already learned to extract features based on the physical attribute that is associated with the data from the radar spectrum. The second output uses these features for the task. The label based further training of this first model for the task results in a further improvement of the first model. Moreover, the amount of labelled data that is need to achieve a same confidence regarding the prediction for the task as is achieved with a training of the first model without any learning based on the physical attribute is reduced.

The method may comprise providing a second model that comprises the same architecture as the learned first model, in particular providing the second model with the learned neural network comprising the learned weights, mapping data of a second radar spectrum, in particular data from a region of interest of the second radar spectrum, with the second model to second features, providing a second output that is configured to map the second features to a prediction for a task, in particular a prediction for a classification or a prediction for an object detection, providing a reference for the prediction for the task, in particular a label indicating a ground truth of the classification or a ground truth of the object detection, mapping the second features with the second output to the prediction for the task, and training the second model, in particular updating the learned weights, depending on a difference between the prediction for the task and the reference. This means, the learned first model is transferred to the second model. The second output uses the features that are produced by the transferred first model for the task.

The second output may comprise a second neural network that has second weights, wherein the method comprises learning the second weights depending on the difference between the prediction for the task and the reference.

The method may comprise capturing a radar spectrum with a radar system, determining the prediction for the task depending on the captured radar spectrum with the trained first model or the trained second model, and actuating a technical system depending on the prediction for the task. The trained first model or the trained second model may be used in operation of the technical system.

The method may comprises learning the first model or the second model, in particular learning the weights, with unlabeled data from a plurality of first radar spectra, in particular range-azimuth spectra, range-velocity spectra and/or range-polarization spectra, and training the learned first model with data from a plurality of second radar spectra, in particular range-azimuth spectra, range-velocity spectra and/or range- polarization spectra, wherein the data from the plurality of second radar spectra is labelled with the respective reference. Labelling radar spectra is expensive in terms of computation cost and time. Using unlabeled data and the physical attribute associated with it improves the feature extraction without expensive labelling. Fine-tuning the learned first model or second model with the labelled data requires less of the expensive labelling.

A device for machine learning comprises at least one processor and at least one memory, wherein the at least one memory comprises instructions that are executable by the at least one processor, and that, when executed by the at least one processor, cause the device to execute the method. The device has advantages that correspond to the advantages of the method.

A technical system may comprise the device and a radar system. The technical system has advantages that correspond to the advantages of the device.

A computer program may comprises instructions that are executable by a computer and that, when executed by the computer, cause the computer to execute the method. The computer program has advantages that correspond to the advantages of the method.

Further advantageous embodiments are derivable from the following description and the drawing. In the drawing:

Fig. 1    schematically depicts a technical system,
Fig. 2    schematically depicts a device for machine learning,
Fig. 3    schematically depicts a first model for machine learning,
Fig. 4    schematically depicts regions of interest from radar spectra,
Fig. 5    depicts flow chart of a method for machine learning.

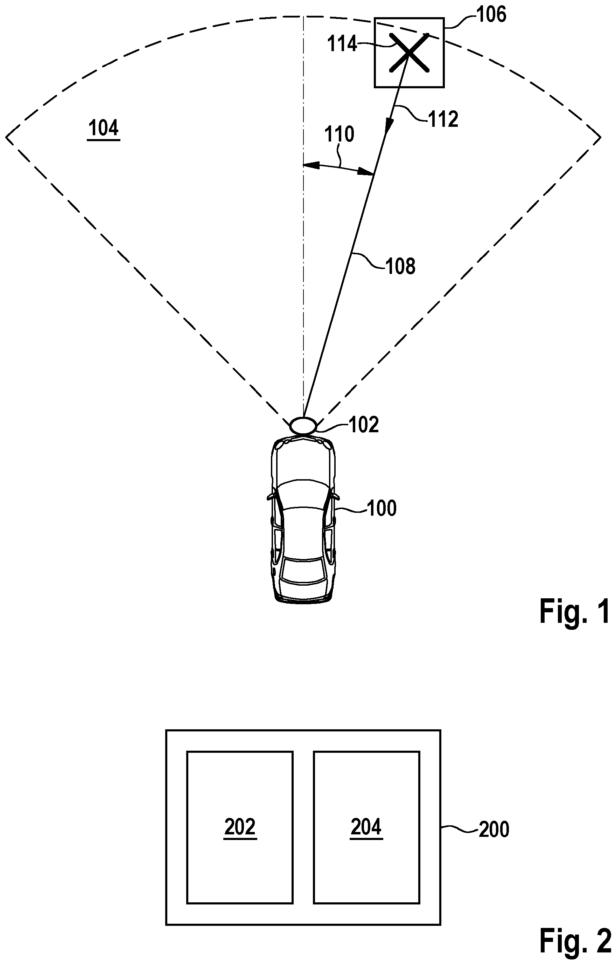

Figure 1 schematically depicts a technical system 100. The technical system 100 is a physical system. The technical system 100 may be a robot. In the example, the technical system 100 is a vehicle. The technical system 100 comprises a radar system 102. The radar system 102 is configured to capture radar spectra. In the example, the radar system 102 is configured to capture the radar spectra in a field-of-view 104.

The radar system 102 is configured to capture for a radar spectrum a physical attribute that is associated with the radar spectrum. The radar spectrum may comprise a reflection of an object 106. In the example, the radar system 102 is configured to capture a range 108 of the object 106 relative to a sensor of the radar system 102. In the example, the radar system 102 is configured to capture an azimuth 110 of the object 106 relative to the radar sensor of the radar system 102. In the example, the radar system 102 is configured to capture a velocity 112 of the object 106 relative to the radar sensor of the radar system 102. In the example, the radar system 102 is configured to capture an indication 114 of the polarizations of the sent and received radar signals of the object 106 relative to the radar sensor of the radar system 102.

The indication 114 may be HH for horizontally polarized sent and received radar signals. The indication 114 may be HV for horizontally polarized sent and vertically polarized received radar signals. The indication 114 may be VH for vertically polarized sent and horizontally polarized received radar signals. The indication 114 may be VV for vertically polarized sent and received radar signals. Figure 2 schematically depicts a device 200 for machine learning. The device 200 comprises at least one processor 202 and at least one memory 204.

The at least one processor 202 is configured to execute instructions that, when executed by the at least one processor 202, cause the at least one processor 102 to execute a method for machine learning. The at least one memory 204 is configured to store the instructions.

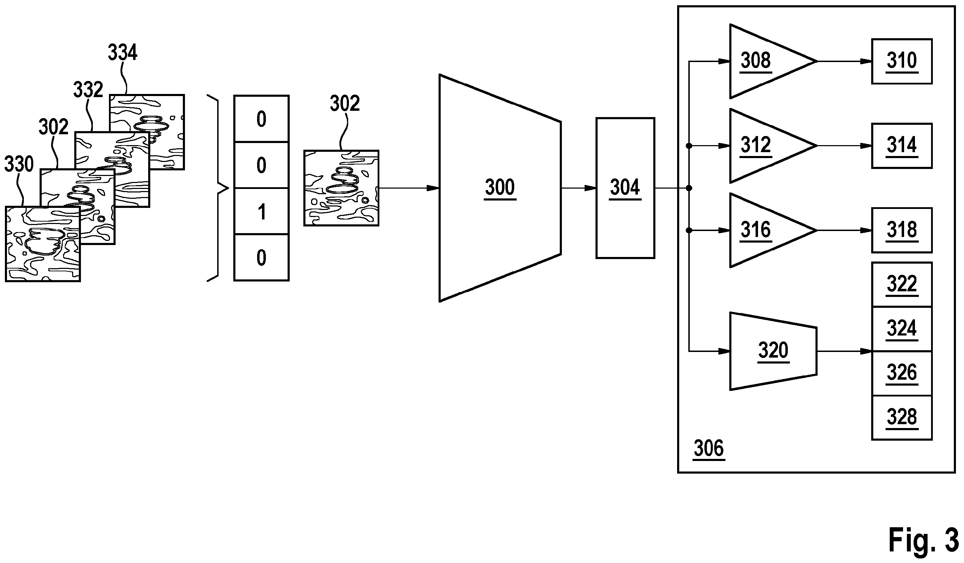

Figure 3 depicts a first model 300 for machine learning schematically. The first model 300 is configured to map data 302, in particular a region of interest, of a radar spectrum to features 304.

The first model 300 is learned in the method. In order to learn the first model 300, a first output 306 is provided. The first output 306 is configured to map the features 304 with a first branch 308 of the first output 306 to a prediction 310 of the range. The first output 306 is configured to map the features 304 with a second branch 312 of the first output 306 to a prediction 314 of the azimuth. The first output 306 is configured to map the features 304 with a third branch 316 of the first output 306 to a prediction 318 of the velocity. The first output 306 is configured to map the features 304 with a fourth branch 320 to a prediction of an indication of the polarizations. In the example, a first prediction 322 is the indication HH. In the example, a second prediction 324 is the indication HV. In the example, a third prediction 326 is the indication VH. In the example, a fourth prediction 328 is the indication VV. This means, the fourth branch 320 is a single channel for the prediction of the polarizations.

In the example depicted in figure 3, the radar spectrum comprises different regions of interest. One region of interest comprises the data 302 and other regions of interest comprise data 330 that is associated with the indication HH, data 332 that is associated with the indication VH and data 334 that is associated with the indication VV respecteively. The data 302 is in the example associated with the indication HV.

The data 302 that is mapped by the first model 300 is in the example randomly picked. In the example the corresponding region of interst is randomly picked from regions of interest of the radar spectrum.

In the machine learning, the data for learning the first model 300 may be sampled from one radar spectrum or from different radar spectra. In one example, different regions of interest are sampled as the data for learning the first model 300. The data of the radar spectra may be associated with no physical attribute, with one physical attribute or with more physical attributes.

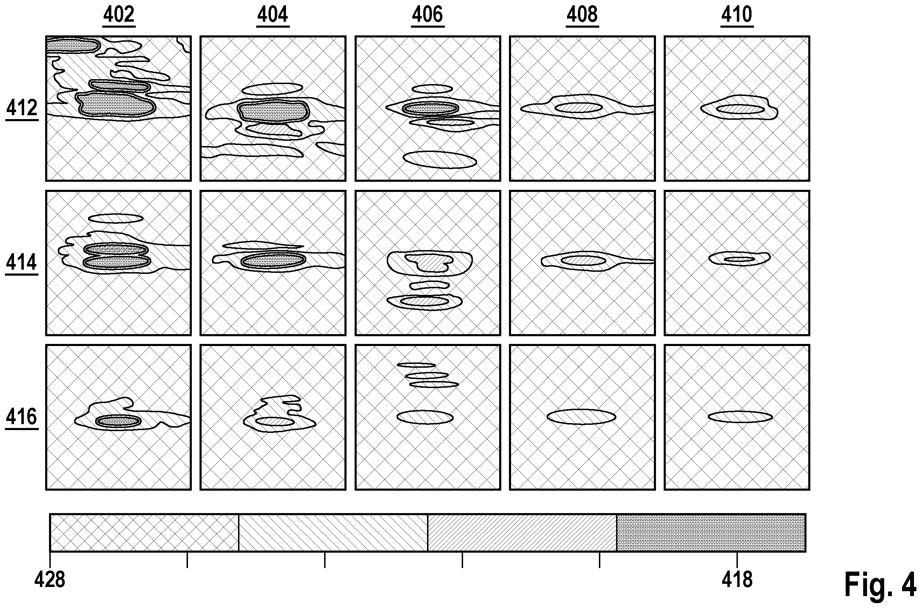

Figure 4 schematically depicts examples for regions of interest from radar spectra. More specifically, figure 4 depicts regions of interest that comprise either a first object 402, e.g. a car, a second object, 404, e.g. a motorbike, a third object 406, e.g. a construction barrier, a fourth object 408, e.g. a pedestrian, or a fifth object 410, e.g. a stop sign.

The figure 4 depicts the regions of interest in different ranges, in particular a first distance range 412, e.g. up to 15m, a second distance range 414, e.g. 15m to 25m, and a third distance range 416, e.g. 25m to 35m, relative to the radar system 102. The regions of interest depicted in figure 4 are sampled from a range-azimuth spectrum or several different range-azimuth spectra.

The radar spectra or the regions of interest comprise an indication of a strength of the radar reflection. In the example, the strength of the reflection decreases from a first strength 418, e.g. 10dB, to a second strength 420, e.g. -40dB.

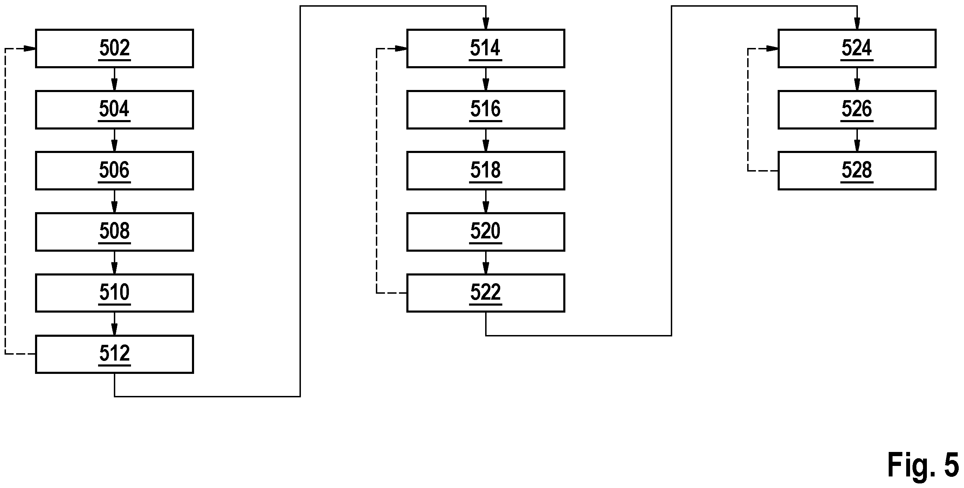

Figure 5 depicts a flow chart of the method. The method is described by way of example for the data 302 that is associated with the indication HV of the polarization. Other radar sprectrum data that is associated to at least one phyiscal attribute is processed alike.

The method comprises a step 502.

In the step 502, the first model 300 is provided.

The first model 300 is configured to map the data 302 to the features 304 that represent the data 302.

The first model 300 is for example a neural network of a architecture for mapping the data 302 to the first features 306. The neural netzwork comprises weights. The weights may be initialized e.g. randomly.

The method comprises a step 504.

In the step 504, the first output 306 is provided.

The first output 306 in the example comprises at least one branch for mapping the features 304 to the prediction of the physical attribute. In the example, the first output 306 comprises one branch 308 for mapping the features 304 to the prediction 310 of the range, one branch 312 for mapping the features 304 to the prediction 314 of the azimuth, one branch 316 for mapping the features 304 to the prediction 318 of the velocity, and one branch 320 for mapping the features 304 to the prediction of the indication of the polarizations.

The first output 306 may comprise more or less branches.

The method comprises a step 506.

In the step 506, the data 302 and the indication HV of the polarization of the data 302 are provided.

The data 302 is associated with the indication HV of the polarization. For example, the data 302 is associated in meta-data for the radar spectrum with the indication HV. The meta-data may be added in the radar system 102 at the time of capturing the radar spectrum.

The method comprises a step 508.

In the step 508, the data 302 is mapped with the first model 300 to the features 304.

The method comprises a step 510.

In the step 510, the features 304 are mapped with the first output 306 to the prediction of the indication of the polarizations.

The method comprises a step 512.

In the step 512, the first model 300 is learned based on the features 304 that the first model 300 extracts from the data 302.

The first model 300 is in the example learned depending on a difference between the prediction of the indication of the polarization by the first output 306 and the indication HV of the polarization that is associated with the data 302.

The method is not limited to the data 302 and the physical attribute being the indication HV of the polarization. The physical attribute may be the range 108 the azimuth 110, the velocity 112 or the indication of one of the other possible polarizations 114 of the sent and received radar signals that the data from the radar spectrum that is used for machine learning is based on.

The first model 300 may be learned depending on the difference between the prediction of one physical attribute and one physical attribute that is associated with the data from the radar spectrum or depending on differences between predictions of physical attributes and the respective physical attribute that is associated with the data from the radar spectrum.

This means, the first model 300 may be learned depending on the difference between the prediction of the range and the range, the difference between the prediction of the azimuth and the azimuth, the difference between the prediction of the velocity and the velocity, and/or the difference between the prediction of the indication of the polarizations and the indication of the polarizations.

In the example, the weights are learned depending on a difference between the prediction of the physical attribute and the physical attribute.

The method may comprise determining weights of the neural network of the first model 300 that reduce or minimize a loss that comprises the difference.

The method may comprises learning the first model 300 or the first output 306 depending on at least two of these differences. The differences are for example summed up in the loss.

According to one example, the first output 306 comprises a first neural network that has first weights. The method may comprise learning the first weights depending on the difference between the prediction of the physical attribute and the physical attribute.

The method may comprise determining the first weights that reduce or minimize the loss that comprises the difference or the differences.

The steps 502 to 512 may be repeated for different data from different radar spectra that are associated with one physical attribute or several physical attributes. The first model 512 may be learned depending on the differences between the predictions of the physical attributes and the respective physical attributes.

An example for the first model 300 is a feature extractor model M that is trained with data $x_i$ from a set of U unlabeled regions of interest $D_u = \{x_i, r_i, \Theta_i, v_i, p_i\}_{\{i=1\}}^{U}$.

In the example $x_i$ indicates a region of interest from one of the radar spectra. The learning of the feature extractor model M is based the radar spectrum data in the regions of interest $x_i$ and on physical information $\{r_i, \Theta_i, v_i, p_i\}$, wherein $r_i$ is the range, $\Theta_i$ is the azimuth, $v_i$ is the velocity, and $p_i$ is the indication of the polarization that is associated with the data $x_i$.

The feature extractor model M is for example configured to output the features 304:

$$f_i = M(x_i) \in \mathbb{R}^h$$

wherein $h$ indicates the dimension of the features $f_i$. In some examples, $h$ is larger than 5000 or larger than 10000 or larger than 100000.

The first output 306 comprises for example the branch 308 $r'_i = A_r(f_i): \mathbb{R}^h \to \mathbb{R}$, wherein $r'_i$ is the prediction 310 of the range.

The first output 306 comprises for example the branch 312 $\theta'_i = A_{az}(f_i): \mathbb{R}^h \to \mathbb{R}$, wherein $\theta'_i$ is the prediction 314 of the azimuth.

The first output 306 comprises for example the branch 316 $v'_i = A_v(f_i): \mathbb{R}^h \to \mathbb{R}$, wherein $v'_i$ is the prediction 318 of the velocity.

The first output 306 comprises for example the branch 320 $p'_i = A_p(f_i): \mathbb{R}^h \to [0,1]^4$, wherein $p'_i$ is a one-hot encoding vector of the prediction of the indication of the polarization.

$A_r(f_i), A_{az}(f_i), A_v(f_i), A_p(f_i)$ are for example parts of the first neural network.

The first model 300 is for example learned with the following loss:

$$L = \alpha_r |r_i - r'_i|^2 + \alpha_{az} |\theta_i - \theta'_i|^2 + \alpha_v |v_i - v'_i|^2 + \alpha_p \sum_{c=1}^{4} p_{i,c} \log p_{i,c}$$

wherein $\alpha_r, \alpha_{az}, \alpha_v, \alpha_p$ are weights for the terms. The weights may be equal or selected to control an amount of influence that the physical attribute has in the learning. The choice of the weights may be determined using a validation set through hyper-parameter search on the four physical attributes or on performance of the down-stream prediction for the task. According to some examples, the weights $\alpha_r$ and $\alpha_{az}$ are larger than the weights $\alpha_v$ and $\alpha_p$, as the location of the objects in the field-of-view relative to the radar sensor have the biggest impact on the radar spectra.

In the example, the weights are updated through backpropagation.

The loss may contain the four terms or a subset of the four terms. A different loss function may be used.

The weights of the model M may be learned using an optimizer (e.g., Adam or SGD optimizer) using various training techniques (batch normalization, drop out, L2 regularization). The training may continue until the desired number of epochs are reached or improvements on a held-out validation set begin to saturate (i.e., early stopping).

This means the method comprises learning the first model 300, in particular the weights, with unlabeled data from a plurality of radar spectra. The radar spectra may be range-azimuth spectra, range-velocity spectra and/or range-polarization spectra.

The method comprises a step 514.

In the step 514, a second output is provided that is configured to map features 304 that the first model 300 determines, to a prediction for a task.

The task is for example, a classification or an object detection.

The second output may comprise a second neural network that has second weights. The second neural network has an architecture for determining the prediction for the task from the first features 304.

The method comprises a step 516.

The step 516 comprises providing a reference for the prediction for the task.

The reference is for example a label indicating a ground truth of the classification or the object detection.

The reference for classification may be a one-hot encoded vector $y_i \in [0,1]^C$ indicating the ground truth class for the data $x_i$.

The method comprises a step 518.

In the step 518, data of a radar spectrum is mapped with the learned first model 300 to the features 304 that represent the data of the radar spectrum.

In the example, data from a region of interest of the radar spectrum is mapped with the learned first model 300.

The method comprises a step 520.

In the step 520, the second features are mapped with the second output to the prediction for the task, e.g. the classification or object detection.

The method comprises a step 522.

In the step 522, the learned first model 300 is trained depending on a difference between the prediction for the task and the reference.

For example, the learned weights of the first model 300 are updated depending on the difference between the prediction for the task and the reference.

According to an example, the second output is configured to output a classification probability vector $y'_i = [q_1, q_2, ..., q_c] \in [0,1]^C$ for classifying C objects as the prediction for the task, wherein $q_1, q_2, ..., q_c$ indicate the probability of the respective class.

The method is not limited to using the first model 300 for learning and training.

The method may comprise providing a second model that comprises the same architecture as the learned first model 300. For example, the second model is provided with the learned neural network comprising the learned weights of the first model 300.

The method may comprise mapping data of the second radar spectrum, in particular data from the region of interest of the second radar spectrum, with the second model to the features 304 that represent the data of the second radar spectrum.

The method may comprise providing the second output configured to map the second features to the prediction for the task.

The method may comprise mapping the second features with the second output to the prediction for the task. The method may comprise training the second model, in particular updating the learned weights in the second model, depending on the difference between the prediction for the task and the reference.

The second output may comprise the same branches as the first output 306.

The steps 516 to 522 may be repeated to train the learned first model, in particular the extractor model M or the second model with data $x_i$ from labelled data $D_l = \{x_i, y_i\}_{\{i=1\}}^{N}$ for determining the prediction for the task or $D_l = \{x_i, y_i, r_i, \Theta_i, v_i, p_i\}_{\{i=1\}}^{N}$ for determining the prediction for the task and for prediction of the respective physical attribute. The second radar spectra may be range-azimuth spectra, range-velocity spectra and/or range-polarization spectra. The data from the plurality of second radar spectra is labelled with the respective reference.

The method may comprises learning the second weights depending on the difference between the prediction for the task and the reference.

The training of the first model 300 or the second model, in particular the training of the weights of the respective neural network may use an optimizer (e.g., Adam or SGD optimizer) using various training techniques (batch normalization, drop out, L2 regularization). The training may continue until the desired number of epochs are reached or improvements on a held-out validation set begin to saturate (i.e., early stopping).

The second output may comprise a single channel for predicting the polarization. During inference, the second output may be used to predict the four polarizations in individual channels.

The method may comprise determining a mean softmax output probability vector as a final probability vector for an object type that is predicted based on the polarizations predicted by the second output.

According to some embodiments, the method comprises a step 524.

The step 524 comprises capturing a radar spectrum with the radar system 102.

According to some embodiments, the method comprises a step 526.

The step 526 comprises, determining the prediction for the task depending on the captured radar spectrum with the trained first model or the trained second model.

According to some embodiments, the method comprises a step 528.

The step 528 comprises and actuating a technical system 100 depending on the prediction for the task.

For the vehicle or the robot, the method may comprise determining whether an automatic braking or an automatic steering actuation is required in order to implement a reaction of the vehicle to the classified or detected object depending on the prediction for the task. The reaction may be a halt of the vehicle in front of the object or a trajectory to avoid the position of the object.

The steps 524 to 528 may be repeated e.g. during operation of the technical system 100. The learning or the training of the first model 300 or the second model may be executed during operation of the technical system 100, in particular from radar spectra that are captured during the operatio nof the technical system 100.

## Claims

1. Computer implemented method for machine learning, **characterized in that** the method comprises providing (502) a first model (300), in particular a neural network that comprises weights, that is configured to map data (302) of a first radar spectrum, in particular data from a region of interest of the first radar spectrum, to first features (304) that represent the data (302), providing (506) the data (302) and a physical attribute of the data, in particular a range (108), an azimuth (110), a velocity (112) or an indication of the polarizations (114) of the sent and received radar signals that the data is based on, providing (504) a first output (306) that is configured to map the first features (304) to a prediction of the physical attribute, in particular a prediction (310) of the range, a prediction (314) of the azimuth, a prediction (316) of the velocity or a prediction (322, ..., 328) of the indication of the polarizations of the sent and received radar signals, mapping (508) the data (302) with the first model (300) to the first features (304), mapping (510) the first features (304) with the first output (306) to the prediction of the physical attribute, and learning (512) the first model (300), in particular learning the weights, depending on a difference between the prediction of the physical attribute and the physical attribute.

2. The method according to claim 1, **characterized in that** the first output (306) comprises a first neural network that has first weights, wherein the method comprises learning (512) the first weights depending on the difference between the prediction of the physical attribute and the physical attribute.

3. The method according to one of the previous claims, **characterized in that** the learning (512) of the first model (300) depending on the difference between the prediction of the at least one physical attribute and the at least one physical attribute comprises determining the difference between the prediction of the range and the range, determining the difference between the prediction of the azimuth and the azimuth, determining the difference between the prediction of the velocity and the velocity, and/or determining the difference between the prediction of the indication of the polarizations and the indication of the polarizations.

4. The method according to claim 3, **characterized in that** the method comprises learning (512) the first model or the first output depending on at least two of the differences.

5. The method according to one of the previous claims, **characterized in that** providing the first output (502) comprises providing the first output to comprise one branch for mapping the first features to the prediction of the physical attribute, in particular one branch for mapping the first features to a prediction of the range, one branch for mapping the first features to a prediction of the azimuth, one branch for mapping the first features to a prediction of the velocity, and/or one branch for mapping the first features to a prediction of the indication of the polarizations.

6. The method according to one of the previous claims, **characterized in that** the method comprises mapping (518) data of a second radar spectrum, in particular data from a region of interest of the second radar spectrum, with the learned first model to second features, providing (514) a second output that is configured to map the second features to a prediction for a task, in particular a prediction for a classification or a prediction for an object detection, providing (516) a reference for the prediction for the task, in particular a label indicating a ground truth of the classification or the object detection, mapping (520) the second features with the second output to the prediction for the task, and training (522) the learned first model, in particular updating the learned weights, depending on a difference between the prediction for the task and the reference.

7. The method according to one of the claims 1 to 5, **characterized in that** the method comprises providing a second model that comprises the same architecture as the learned first model, in particular providing the second model with the learned neural network comprising the learned weights, mapping data of a second radar spectrum, in particular data from a region of interest of the second radar spectrum, with the second model to second features, providing a second output that is configured to map the second features to a prediction for a task, in particular a prediction for a classification or a prediction for an object detection, providing a reference for the prediction for the task, in particular a label indicating a ground truth of the classification or a ground truth of the object detection, mapping the second features with the second output to the prediction for the task, and training the second model, in particular updating the learned weights, depending on a difference between the prediction for the task and the reference.

8. The method according to claim 6 or 7, **characterized in that** the second output comprises a second neural network that has second weights, wherein the method comprises learning (522) the second weights depending on the difference between the prediction for the task and the reference.

9. The method according to one of the claims 6 to 8, **characterized in that** the method comprises capturing (524) a radar spectrum with a radar system (102), determining (526) the prediction for the task depending on the captured radar spectrum with the trained first model or the trained second model, and actuating (528) a technical system (100) depending on the prediction for the task.

10. The method according to one of the previous claims, **characterized in that** the method comprises learning (512) the first model, in particular learning the weights, with unlabeled data from a plurality of first radar spectra, in particular range-azimuth spectra, range-velocity spectra and/or range-polarization spectra, and training (522) the learned first model or the second model with data from a plurality of second radar spectra, in particular range-azimuth spectra, range-velocity spectra and/or range-polarization spectra, wherein the data from the plurality of second radar spectra is labelled with the respective reference.

11. Device (200) for machine learning, **characterized in that** the device comprises at least one processor (202) and at least one memory (204), wherein the at least one memory (204) comprises instructions that are executable by the at least one processor (202), and that, when executed by the at least one processor (202), cause the device to execute the method according to one of the claims 1 to 10.

12. Technical system (100), **characterized in that** the technical system (100) comprises the device (200) according to claim 11 and a radar system (102).

13. Computer program, **characterized in that** the computer program comprises instructions that are executable by a computer and that, when executed by the computer, cause the computer to execute the method according to one of the claims 1 to 10.

**Amended claims in accordance with Rule 137(2) EPC.**

1. Computer implemented method for machine learning, **characterized in that** the method comprises providing (502) a first model (300), in particular a neural network that comprises weights, that is configured to map data (302) of a first radar spectrum, in particular data from a region of interest of the first radar spectrum, to first features (304) that represent the data (302), providing (506) the data (302) and a physical attribute of the data, wherein the physical attribute is a range (108), an azimuth (110), or an indication of the polarizations (114) of the sent and received radar signals that the data is based on, providing (504) a first output (306) that is configured to map the first features (304) to a prediction of the physical attribute, mapping (508) the data (302) with the first model (300) to the first features (304), mapping (510) the first features (304) with the first output (306) to the prediction of the physical attribute, and learning (512) the first model (300), in particular learning the weights, depending on a difference between the prediction of the physical attribute and the physical attribute.

2. The method according to claim 1, **characterized in that** the first output (306) comprises a first neural network that has first weights, wherein the method comprises learning (512) the first weights depending on the difference between the prediction of the physical attribute and the physical attribute.

3. The method according to one of the previous claims, **characterized in that** the learning (512) of the first model (300) depending on the difference between the prediction of the at least one physical attribute and the at least one physical attribute comprises determining the difference between the prediction of the range and the range, determining the difference between the prediction of the azimuth and the azimuth, determining the difference between the prediction of the velocity and the velocity, and/or determining the difference between the prediction of the indication of the polarizations and the indication of the polarizations.

4. The method according to claim 3, **characterized in that** the method comprises learning (512) the first model or the first output depending on at least two of the differences.

5. The method according to one of the previous claims, **characterized in that** providing the first output (502) comprises providing the first output to comprise one branch for mapping the first features to the prediction of the physical attribute, in particular one branch for mapping the first features to a prediction of the range, one branch for mapping the first features to a prediction of the azimuth, one branch for mapping the first features to a prediction of the velocity, and/or one branch for mapping the first features to a prediction of the indication of the polarizations.

6. The method according to one of the previous claims, **characterized in that** the method comprises mapping (518) data of a second radar spectrum, in particular data from a region of interest of the second radar spectrum, with the learned first model to second features, providing (514) a second output that is configured to map the second features to a prediction for a task, in particular a prediction for a classification or a prediction for an object detection, providing (516) a reference for the prediction for the task, in particular a label indicating a ground truth of the classification or the object detection, mapping (520) the second features with the second output to the prediction for the task, and training (522) the learned first model, in particular updating the learned weights, depending on a difference between the prediction for the task and the reference.

7. The method according to one of the claims 1 to 5, **characterized in that** the method comprises providing a second model that comprises the same architecture as the learned first model, in particular providing the second model with the learned neural network comprising the learned weights, mapping data of a second radar spectrum, in particular data from a region of interest of the second radar spectrum, with the second model to second features, providing a second output that is configured to map the second features to a prediction for a task, in particular a prediction for a classification or a prediction for an object detection, providing a reference for the prediction for the task, in particular a label indicating a ground truth of the classification or a ground truth of the object detection, mapping the second features with the second output to the prediction for the task, and training the second model, in particular updating the learned weights, depending on a difference between the prediction for the task and the reference.

8. The method according to claim 6 or 7, **characterized in that** the second output comprises a second neural network that has second weights, wherein the method comprises learning (522) the second weights depending on the difference between the prediction for the task and the reference.

9. The method according to one of the claims 6 to 8, **characterized in that** the method comprises capturing (524) a radar spectrum with a radar system (102), determining (526) the prediction for the task depending on the captured radar spectrum with the trained first model or the trained second model, and actuating (528) a technical system (100) depending on the prediction for the task.

10. The method according to one of the previous claims, **characterized in that** the method comprises learning (512) the first model, in particular learning the weights, with unlabeled data from a plurality of first radar spectra, in particular range-azimuth spectra, range-velocity spectra and/or range- polarization spectra, and training (522) the learned first model or the second model with data from a plurality of second radar spectra, in particular range-azimuth spectra, range-velocity spectra and/or range-polarization spectra, wherein the data from the plurality of second radar spectra is labelled with the respective reference.

11. Device (200) for machine learning, **characterized in that** the device comprises at least one processor (202) and at least one memory (204), wherein the at least one memory (204) comprises instructions that are executable by the at least one processor (202), and that, when executed by the at least one processor (202), cause the device to execute the method according to one of the claims 1 to 10.

12. Technical system (100), **characterized in that** the technical system (100) comprises the device (200) according to claim 11 and a radar system (102).

13. Computer program, **characterized in that** the computer program comprises instructions that are executable by a computer and that, when executed by the computer, cause the computer to execute the method according to one of the claims 1 to 10.

**Fig. 1**

**Fig. 2**

Fig. 3

EP 4 492 083 A1

**Fig. 4**

EP 4 492 083 A1

Fig. 5

Europäisches
Patentamt

European
Patent Office

Office européen
des brevets

# EUROPEAN SEARCH REPORT

**Application Number**

EP 23 18 4414

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHUMANN OLE ET AL: "Scene Understanding With Automotive Radar", IEEE TRANSACTIONS ON INTELLIGENT VEHICLES, IEEE, vol. 5, no. 2, 25 November 2019 (2019-11-25), pages 188-203, XP011790609, ISSN: 2379-8858, DOI: 10.1109/TIV.2019.2955853 [retrieved on 2020-05-22] * abstract * * Sections I-VI. * | 1-13 | INV. G01S7/41 G01S13/42 G01S13/50 G01S7/02 G06N20/00 G06N5/01 G06N3/04 G06N3/08 |
| X | US 2022/196798 A1 (CHEN CHULONG [US] ET AL) 23 June 2022 (2022-06-23) * paragraphs [0067] - [0078], [0111] - [0116], [0184] - [0219] * * paragraphs [0245] - [0275], [0373] - [0410], [0459] - [0478] * * figures 1,3,8-14,18,19,27 * | 1-13 | |
| X | HAYKIN S ET AL: "CLASSIFICATION OF RADAR CLUTTER USING NEURAL NETWORKS", IEEE TRANSACTIONS ON NEURAL NETWORKS, IEEE SERVICE CENTER, PISCATAWAY, NJ, US, vol. 2, no. 6, 1 November 1991 (1991-11-01), pages 589-600, XP000228453, ISSN: 1045-9227, DOI: 10.1109/72.97936 * abstract * * Sections I-V; figures 4,5 * | 1-13 | **TECHNICAL FIELDS SEARCHED (IPC)**<br><br>G01S<br>G06N |

The present search report has been drawn up for all claims

| Place of search | Date of completion of the search | Examiner |
|---|---|---|
| Munich | 3 November 2023 | Fernández Cuenca, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

**EP 4 492 083 A1**

## ANNEX TO THE EUROPEAN SEARCH REPORT
## ON EUROPEAN PATENT APPLICATION NO.

**EP 23 18 4414**

This annex lists the patent family members relating to the patent documents cited in the above-mentioned European search report.
The members are as contained in the European Patent Office EDP file on
The European Patent Office is in no way liable for these particulars which are merely given for the purpose of information.

**03-11-2023**

| Patent document cited in search report | Publication date | Patent family member(s) | Publication date |
|---|---|---|---|
| US 2022196798 A1 | 23-06-2022 | NL 2029854 A | 15-07-2022 |
| | | TW 202240199 A | 16-10-2022 |
| | | US 2022196798 A1 | 23-06-2022 |
| | | WO 2022139783 A1 | 30-06-2022 |

EPO FORM P0459

For more details about this annex : see Official Journal of the European Patent Office, No. 12/82